# EUROPÄISCHE PATENTANMELDUNG

(11) **EP 3 210 510 A1**
(43) Veröffentlichungstag der Anmeldung: **30.08.2017**
(21) Anmeldenummer: 17163970.1
(22) Anmeldetag: 30.10.2013
(51) Int. Cl.: A47K 10/32, A47K 10/38

(54) **MEHRWEGSPENDERSYSTEM FÜR FEUCHTTÜCHER**

(30) Priorität: 01.11.2012 DE 102012022161
(62) Teilanmeldung aus: 13190773.5
(71) Anmelder: Bode Chemie GmbH, 22525 Hamburg (DE)
(72) Erfinder: Dr. Bloß, Richard, 25462 Rellingen (DE); Gayko, Melanie, 21220 Seevental (DE); Prof. Dr. Kampf, Günter, 22391 Hamburg (DE); Ostermeyer, Christiane, 22559 Hamburg (DE); Eckardt, Christian, 22869 Schenefeld (DE)
(74) Vertreter: Kossak, Sabine

(57) **Zusammenfassung**

Die Erfindung betrifft ein Mehrwegspendersystem für Feuchttücher, umfassend einen Spenderbehälter aus einem Behälter und einem Deckel sowie einem trockenen Tuchpacken in einem Innenbeutel zur Befestigung in dem Spenderbehälter als auch eine wässrige Reinigungs- oder Desinfektionsmittellösung zur Tränkung des Tuchpackens. Das erfindungsgemäße Mehrwegspendersystem dient der Vermeidung einer Biofilmbildung.

## Beschreibung

Gegenstand der Erfindung ist ein Mehrwegspendersystem für Feuchttücher, umfassend einen Spenderbehälter, bestehend aus einem Behälter und einem Deckel mit einer Entnahmeöffnung und ggf. einer Schutzkappe, einen trockenen Tuchpacken, der im Inneren des Behälters platziert ist, und eine wässrige Reinigungs- oder Desinfektionsmittellösung. Weiterhin ist Gegenstand der Erfindung ein Verfahren zur Herstellung eines Mehrwegspendersystems für Feuchttücher.

Zur Reinigung und Desinfektion von Flächen werden häufig Feuchttücher verwendet, die mit einer Reinigungslösung oder einer Desinfektionsmittellösung getränkt sind. Diese Feuchttücher haben den Vorteil, dass sie gebrauchsfertig vorliegen und der Anwender nicht ein Reinigungstuch und eine für die Reinigung geeignete Lösung separat aufbewahren und handhaben muss. Die Feuchttücher bestehen aus zwei Komponenten:
- einem trockenen Tuch als Trägermaterial und
- einer niedrigviskosen Lösung, mit der das Tuch getränkt ist.

Die Feuchttücher müssen entsprechend so verpackt werden, dass sie auch bei längerer Lagerung nicht austrocknen und ohne großen Aufwand möglichst einzeln aus der Verpackung entnehmbar sind.

Für Feuchttücher in Form getränkter Vliestücher, die zur Reinigung von unbelebten Flächen und Instrumenten dienen, sind Mehrwegspendersysteme bekannt, die üblicherweise aus einem Behälter, in welchem die Feuchttücher platziert sind, bestehen. Die Feuchttücher können bereits mit dem jeweiligen Reinigungs- und/oder Desinfektionsmittel getränkt sein.

Ein solches System ist aus der WO 2010/068590 A1 bekannt, diese beschreibt Spendersysteme mit einem stationären äußeren Behälter und einer speziell geformten Entnahmeöffnung, durch die Feuchttücher entnommen werden können. Der Behälter wird jeweils mit einem Beutel Feuchttücher gefüllt und nach Verbrauch wiederbefüllt. Bei den verwendeten Feuchttüchern handelt es sich um bereits getränkte Tücher, die sofort einsetzbar sind.

Es gibt aber auch Systeme, bei denen in den Spenderbehälter eine trockene Vliesrolle eingebracht wird und diese mit einer Anwendungslösung getränkt wird. Ein solches System ist beispielsweise aus der DE 10 2005 024 647 A1 bekannt. Das beschriebene System besteht aus einem Behälter, in den eine Rolle von Vliestüchern eingebracht ist. Die Rolle wird mit einer Anwendungslösung getränkt. Der Behälter ist mit einem Deckel verschlossen, der eine Entnahmeöffnung aufweist. Ein Ende der Rolle wird durch die Öffnung des Entnahmedeckels gezogen, so dass ein definierter Abschnitt des Tuches aus der Öffnung herauslugt. Bei der Entnahme kann das Tuch an einer vorgesehenen Perforation abgetrennt werden, so dass ein Rest des nächsten Tuches aus der Öffnung ragt.

Nach dem Aufgebrauch der Tücher muss der Behälter für eine Wiederverwendung gereinigt und desinfiziert werden. Diese Reinigung kann manuell oder maschinell erfolgen. Zudem muss das System gemäß Herstellerangabe einer ausreichenden Trocknung unterzogen werden, http://www.produktkatalog.bode-chemie.de/produkte/flaechen/produktblaetter/x wipes.pdf (zuletzt aufgesucht am 19.10.2012).

Es hat sich gezeigt, dass dieser Aufbereitungsprozess des Behälters aus Reinigung, Desinfektion und Trocknung häufig nicht ordnungsgemäß durchgeführt wird oder zumindest das System nicht ausreichend getrocknet wird. Sofern der Behälter mit Wasserresten von der Reinigung oder ungereinigt aufbewahrt wird, besteht die Gefahr, dass sich auf der Innenseite des Behälters Mikroorganismen ansiedeln und einen Biofilm aufbauen können. Wenn sich ein Biofilm aufbaut, besteht beim nachfolgenden Einsatz die Gefahr einer mikrobiologischen Kontamination der Reinigerlösung bzw. Desinfektionslösung und der Vliestücher. Diese Gefahr ist besonders bei solchen Desinfektionsmittellösungen groß, die ihrerseits nicht geeignet sind, Biofilme abzubauen.

Biofilme bestehen aus von den Mikroorganismen ausgeschiedenen extrazellulären polymeren Substanzen (EPS), einer dünnen schleimartigen Matrix, in der die Mikroorganismen, wie Bakterien, Pilze, Algen und Protozoen, eingebettet sind. Solche Biofilme bilden sich überwiegend in wässrigen Systemen. Der Biofilm bietet dabei den darin enthaltenen Mikrolebewesen einen Schutz, so dass beispielsweise die Toleranz gegenüber extremen pH-Wert- und Temperaturschwankungen steigt. Zudem ist die Penetration von Desinfektionswirkstoffen bzw. Bioziden in den Film erschwert. Die Wirkstoffe können nur noch schwer oder gar nicht in die Biofilme eindringen, so dass Desinfektionswirkstoffe gegen Bakterien, die in Biofilmen geschützt sind, ihre Wirksamkeit nicht mehr entfalten. Es hat sich gezeigt, dass die Desinfektionsleistung gegenüber Biofilmen deutlich schlechter ist als gegenüber suspendierten Zellen, Wallhäußers "Praxis der Sterilisation, Desinfektion, Antiseptik und Konservierung", A. Kramer, O. Assadian (Hrsg.), Thieme Verlag, 2008.

Baut sich im Spendersystem ein solcher Biofilm auf, so können die im Biofilm lebenden Mikroorganismen häufig nicht durch die zugegebenen Desinfektionsmittel abgetötet werden. Der Biofilm selbst kann mit den Tüchern in Berührung kommen, so dass über die Tücher die Mikroorganismen weiterverteilt werden, statt dass die Tücher zur Desinfektion dienen. Zudem können die im Biofilm enthaltenen Mikroorganismen auf die Tücher im Behälter übersiedeln. Unzureichend gereinigte Mehrwegspendersysteme können daher eine Quelle von mikrobiologischen Verunreinigungen werden.

Nachteil der bekannten Spendersysteme ist somit, dass bei Wiederverwendung der nicht sachgemäß aufbereiteten Spendersysteme die Vliessubstrate verunreinigt sein können, insbesondere, wenn ein Biofilm entsteht, und eine Übertragung und Verbreitung der Mikroorganismen durch die Feuchttücher erfolgen kann.

Aufgabe der vorliegenden Erfindung ist es somit, ein Mehrwegspendersystem bereitzustellen, das wirksam vor einer Verunreinigung durch Mikroorganismen geschützt ist und insbesondere das Vliessubstrat vor einer Verkeimung und dem Aufbau und der Ausbreitung eines Biofilms schützt.

Die Aufgabe wird erfindungsgemäß gelöst durch ein Mehrwegspendersystem für Desinfektionstücher gemäß Patentanspruch 1.

Weitere Ausführungsformen sind Gegenstand der Unteransprüche oder nachfolgend beschrieben.

Das erfindungsgemäße Mehrwegspendersystem für Desinfektionstücher, umfasst
- einen Spenderbehälter, bestehend aus einem Behälter und einem Deckel mit einer Entnahmeöffnung und ggf. einer Schutzkappe,
- einen trockenen Tuchpacken, der im Inneren des Spenderbehälters platziert ist,
- eine wässrige Desinfektionsmittellösung,
wobei das Mehrwegspendersystem einen Innenbeutel aus Kunststoff aufweist, der zwischen der Wandung des Behälters und dem trockenen Tuchpacken angeordnet ist und den Tuchpacken vollständig gegen die Wandung des Behälters abdichtet, und der Innenbeutel einen Befestigungsrand aufweist, mit dem er an dem Behälter befestigbar ist, indem der obere, offene Rand des Innenbeutels über den Rand des Behälters gezogen wird und über diesen überlappt, oder indem der Innenbeutel, mit dem darin angeordneten mit der Desinfektionslösung getränkten Tuchpacken, an dem Deckel befestigt wird.

Der im erfindungsgemäßen Mehrwegspendersystem verwendete Tuchpacken ist bevorzugt eine Tuchrolle oder ein gefalteter Stapel Tücher, besonders bevorzugt eine Tuchrolle. Der verwendete trockene Tuchpacken entspricht dabei dem im erfindungsgemäßen Mehrwegspendersystem verwendeten Tuchpacken. Die trockene Tuchrolle ist bevorzugt perforiert, so dass einzelne Tücher von der Rolle abgerissen werden können. Der Tuchstapel kann in jeder bekannten Form gefaltet sein, bevorzugt sind die Tücher so gefaltet, dass jeweils zwei aufeinanderliegende Tücher ineinander greifen. Der Tuchpacken ist besonders bevorzugt eine Rolle Vliestücher oder ein Stapel gefalteter Vliestücher, wobei eine perforierte Vliestuchrolle bevorzugt ist.

Bevorzugt wird das erste Tuch eines eingesetzten Tuchpackens nach Aktivierung des Mehrwegspendersystems verworfen.

Der Innenbeutel wird bevorzugt an dem Behälter befestigt, indem der obere, offene Rand des Innenbeutels über den Rand des Behälters gezogen wird und über diesen überlappt. Dieser der Befestigung dienende obere Rand des Innenbeutels unterscheidet sich vorzugsweise nicht vom sonstigen Beutel, insbesondere in Bezug auf das Material, die Materialdicke oder Textur. Alternativ wird der Innenbeutel bevorzugt am Deckel befestigt, indem beispielsweise der Rand des Innenbeutels durch die Entnahmeöffnung im Deckel gezogen wird und seitlich über den Deckel ausgebreitet wird.

Der Innenbeutel sollte bevorzugt bestimmte Qualitätseigenschaften der Siegelung aufweisen, die gewährleisten, dass keine Mikroorganismen von außen in den Beutel gelangen. Idealerweise weisen sie eine Versiegelung gemäß DIN EN 11607-2 für sterile Verpackungen auf. Die Eignung der Innenbeutel ist vorzugsweise durch Dichtigkeits- und Siegelnahtfestigkeitstests zu belegen.

Der Innenbeutel muss so dimensioniert sein, dass einerseits der Tuchpacken locker umhüllt ist, damit bei Befeuchtung des Tuchpackens ausreichend Volumen zur Expansion des Tuchpackens und für überschüssige Tränkflüssigkeit zur Verfügung steht und andererseits die Innenfläche des Behälters gut von dem Innenbeutel überdeckt wird. Die Länge des Beutels muss ausreichend sein, um den Beutel sicher über den Behälterrand ziehen zu können, bzw. alternativ den Beutel durch die Entnahmeöffnung ziehen zu können und in beiden Fällen in dieser Position zu fixieren.

Die Breite des Innenbeutels muss daher mindestens der halbe Außenumfang des Spenders sein und zusätzlich bevorzugt mindestens plus 5% und höchstens plus 50 %. Die Länge des Innenbeutels muss mindestens die Innenhöhe des Spenders betragen und zusätzlich das "Setzen" des Beutels mit dem Tuchpacken bei Einbringen der wässrigen Tränklösung und das sichere Fixieren über den Rand oder am Deckel berücksichtigen, also Behälterhöhe plus mindestens 30 % und höchstens plus 90 %.

Der Innenbeutel besteht bevorzugt aus einer flüssigkeitsdichten, wasser- und alkoholbeständigen Kunststofffolie. Besonders bevorzugt ist als Kunststoff ein Polyolefin, z.B. ein Polyethylen oder ein Polypropylen, ein Polyvinylchlorid, ein Polyester, ein Polycarbonat oder ein Polystyrol. Häufig werden auch Mehrschichtverbunde aus einer Kombination unterschiedlicher Kunststoffe hergestellt, beispielsweise aus Polyamid und Polyethylen. Damit können bestimmte Eigenschaften, wie z.B. das Permeationsverhalten, verbessert werden. Auch kann eine spezielle Sperrschicht eingearbeitet sein. Besonders bevorzugt sind Folien aus Mehrfachverbundschichten, damit sie eine besonders hohe Reißfestigkeit besitzen. Dies wird z.B. erreicht, wenn eine Verstärkungsschicht zwischen zwei Trägerfolien als Dreifachverbundfolie eingearbeitet wird. In einer weiteren Ausführungsform können Cellophanfolien, die aus Cellulose hergestellt sind und mit einer Kunststofffolie beschichtet sind, verwendet werden. Ebenso können in einer weiteren Ausführungsform Bio-Kunststoffe wie Polylactit, Celluloseacetat und Stärkeblends verwendet werden.

Bevorzugte Verbundfolien sind mehrschichtige Verpackungsfolien (Multilayer-Folien), aus denen die verwendeten flexiblen Beutel hergestellt werden. Die einzelnen Folienschichten werden üblicherweise extrudiert oder kaschiert/laminiert. Der Aufbau dieser Verbundfolien besteht aus einzelnen Schichten, welche für den jeweiligen Bedarfsfall anzupassen sind. Durch eine lösemittelfreie oder auch lösemittelhaltige Kaschierung, also eine Kleberkaschierung, erfolgt der Aufbau der einzelnen Mono-Folien zum Verbund. Auch Extrusionskaschierung oder auch Extrusionsbeschichtung kann zum Einsatz kommen. Eine besondere Beständigkeit bei Desinfektionswirkstoffen weisen Folienschichten aus Polyolefin, z.B. Polyethylen, Polypropylen, oder Polyester, Polyamid und Polyvinylchlorid auf.

Die Trägerfolie ist die Folienschicht, welche bei Bedarf auch zur Bedruckung der Folie (Druckfolie) herangezogen werden kann. Die Verbundfolie kann mit einer zusätzlichen Barriereschicht ausgestattet werden, wenn die Trägerfolie nicht schon genügend Eigenbarriere aufweisen sollte. Die zusätzliche Barriereschicht (z.B. Aluminium als undurchlässige Schicht) kann dann in die Siegelfolie eingebracht werden. Trägerfolien sind auch mit kleiner, mittlerer und höheren Barriere ausstattbar. 2-Schicht-Verbunde werden als Duplex, 3-Schicht-Verbunde als Triplex bezeichnet.

Weiterhin vorteilhaft sind biaxial orientierte Polyesterfolien ("boPET"), es sind Folien aus Polyethylenterephthalat, die sich durch eine besonders hohe Zugfestigkeit auszeichnen und eine hohe chemische und mechanische Stabilität aufweisen.

Die Folien sind in einer Ausführungsform mit einer antibakteriellen Ausstattung versehen, beispielsweise mit einer Silberbeschichtung oder einer Beschichtung mit einem anderen antimikrobiellen Wirkstoff, wie z.B. Polyhexanid.

Die Folie, aus der der Innenbeutel besteht, weist bevorzugt eine Schichtstärke im Bereich von 5 µm bis 150 µm auf, bevorzugt 10 µm bis 70 µm, weiter bevorzugt 20 µm bis 60 µm.

Bevorzugt weist der Innenbeutel Markierungen auf, die die korrekte Befestigung des Innenbeutels am Behälter und/oder am Deckel angeben. Beispielsweise weist der Innenbeutel eine Markierung auf, die anzeigt, wie weit der Innenbeutel über den Rand des Behälters gezogen werden soll.

Bei dem Innenbeutel handelt es sich um einen Einwegbeutel, der am Ende der vom Hersteller vorgegebenen Standzeit des Systems von 4 Wochen, bzw. wenn der Tuchpacken aufgebraucht ist, entsorgt wird. Durch die Verwendung eines Einwegbeutels kann eine Kontamination durch ggf. am Beutel anhaftende Mikroorganismen verhindert werden, da diese jeweils mit dem Beutel entsorgt werden.

Erfindungsgemäß bevorzugt dient der Innenbeutel gleichzeitig auch als Verpackung für den Tuchpacken. Alternativ kann der Innenbeutel mit Tuchpacken in einer Umverpackung untergebracht sein. In einer alternativen Ausführungsform enthält der Innenbeutel oder alternativ die Umverpackung zusätzlich zu dem Tuchpacken einen Deckel. In diesem Fall ist der Deckel als Einwegdeckel konzipiert. Dieser Einwegdeckel wird in den beschriebenen Verfahren zur Herstellung eines erfindungsgemäßen Mehrwegspendersystems anstelle des bisherigen Deckels des Spenderbehälters verwendet, d.h. dieser Einwegdeckel wird nach Befestigung des Innenbeutels an dem Behälter auf den Behälter gesetzt oder an diesem Einwegdeckel wird der Innenbeutel befestigt.

In einer weiteren Ausführungsform ist der Deckel des Mehrwegspendersystems von vornherein mit dem Innenbeutel verbunden.

Es gibt somit Nachfüllpackungen für Mehrwegspender, enthaltend
(a) trockene Tuchpacken im Innenbeutel
(b) trockene Tuchpacken und Einwegdeckel im Innenbeutel
und ggf. eine Umverpackung sowie Nachfüllpackungen mit ggf. miteinander verbundenem Innenbeutel und Deckel, die mit einer Umverpackung versehen sind. Der Innenbeutel ist geeignet für den Transport innerhalb eines Krankenhauses o.ä. Für den Transport vom Hersteller zum Krankenhaus wird vorzugsweise ein Karton für eine oder mehrere Nachfüllpackungen verwendet.

Die Nachfüllpackungen sind vorzugsweise verschlossen, wobei als Verschlussmittel jedes Mittel geeignet ist, das üblicherweise geeignet ist, Folienbeutel zu verschließen, beispielsweise Clipse, Kabelbinder, Klebebänder oder ein Verschweißen des oberen Beutelrandes.

Das erfindungsgemäße Mehrwegspendersystem kann über das erfindungsgemäße Verfahren hergestellt werden.

Ein Verfahren zur Herstellung eines Mehrwegspendersystems für Feuchttücher, umfasst die Schritte
a. Bereitstellen eines Spenderbehälters, bestehend aus einem Behälter und einem Deckel,
b. Abnehmen des Deckels von dem Behälter und Einlegen eines bevorzugt geschlossenen Innenbeutels aus Kunststoff, der einen trockenen Tuchpacken enthält,
c. ggf. Öffnen des Innenbeutels,
d1. Befestigen des Innenbeutels am Behälter, bevorzugt durch Ziehen des oberen, offenen Rands des Innenbeutels vollständig über den Rand des Behälters, so dass der Tuchpacken durch den Innenbeutel vollständig gegen die Wandung des Behälters abgedichtet ist, und anschließendes Gießen einer Desinfektionsmittellösung, über den Tuchpacken,
   oder
d2. Gießen einer Desinfektionsmittellösung, über den Tuchpacken, und anschließend Befestigen des Innenbeutels an einem zweiten Deckel, so dass der Tuchpacken durch den Innenbeutel vollständig gegen die Wandung des Behälters und die Unterseite des Deckels abgedichtet ist, und ggf. Führen des ersten Tuchs des Tuchpackens teilweise durch die Entnahmeöffnung,
e. Positionieren des Deckels auf dem Behälter und ggf. Verschließen des Deckels mit einer Schutzkappe.

Ein Verfahren, das bevorzugt für einen Spenderbehälter mit Einwegdeckel verwendet wird, umfasst die folgenden Schritte:
a. Bereitstellen eines Spenderbehälters, bestehend aus einem Behälter und einem ersten Deckel,
b. Abnehmen des ersten Deckels von dem Behälter, Verwerfen des ersten Deckels und Einlegen eines, bevorzugt geschlossenen, Innenbeutels aus Kunststoff, der einen trockenen Tuchpacken enthält, in den Behälter,
c. ggf. Öffnen des Innenbeutels,
d1. Befestigen des Innenbeutels am Behälter, bevorzugt durch Ziehen des oberen, offenen Rands des Innenbeutels vollständig über den Rand des Behälters, so dass der Tuchpacken durch den Innenbeutel vollständig gegen die Wandung des Behälters abgedichtet ist, und anschließendes Gießen einer Desinfektionsmittellösung, über den trockenen Tuchpacken,
e. Positionieren eines zweiten Deckels auf dem Behälter und ggf. Verschließen des Deckels mit einer Schutzkappe.

Die Aufgabe wird weiterhin gelöst durch ein Verfahren zur Herstellung eines Mehrwegspendersystems für Feuchttücher, bei Verwendung eines Mehrwegdeckels, umfasst die folgenden Schritte
a. Spenderbehälter, bestehend aus einem Behälter und einem Deckel, bereitstellen,
b. Deckel des Behälters abnehmen und einen, bevorzugt geschlossenen, Innenbeutel aus Kunststoff, der einen trockenen Tuchpacken enthält, einlegen,
c. ggf. den Innenbeutel öffnen,
d2. eine Desinfektionsmittellösung, über den Tuchpacken gießen, und anschließend den Innenbeutel am Deckel befestigen, so dass der Tuchpacken durch den Innenbeutel vollständig gegen die Wandung des Behälters und die Unterseite des Deckels abgedichtet ist, und ggf. Führen des ersten Tuchs des Tuchpackens teilweise durch die Entnahmeöffnung im Deckel,
e. den Deckel auf dem Behälter positionieren und ggf. mit einer Schutzkappe den Deckel verschließen.

Bevorzugt wird bei Durchführung des erfindungsgemäßen Verfahrens mit den Schritten a bis e nach Schritt d der Anfang des Tuchpackens aus der Mitte des Tuchpackens herausgezogen und nach Tränken des Tuchpackens mit der Desinfektionsmittellösung wird der Anfang des Tuchpackens durch die Entnahmeöffnung des Deckels geführt.

In einer weiteren Ausführungsform ist der Deckel des Mehrwegspendersystems von vornherein mit dem Innenbeutel verbunden. In dem oben beschriebenen Verfahren mit den Schritten a bis e ist dann eine anwenderseitige Befestigung des Innenbeutels am Deckel oder am Behälter nicht erforderlich. Der Schritt c, das Öffnen des Innenbeutels, geschieht in diesem Fall nicht durch Aufschneiden des Innenbeutels oder Ähnliches, sondern in diesem Falle ist eine separate verschließbare Öffnung vorgesehen, über die die wässrige Desinfektionslösung auf den trockenen Tuchpacken gegeben werden kann.

Bei einer bevorzugten Variante wird die Desinfektionsmittellösung langsam spiralförmig von der Mitte des Tuchpackens nach außen über den Tuchpacken gegossen.

Aufgrund des einfacheren Handlings wird der Innenbeutel mit dem in ihm enthaltenen Tuchpacken vorzugsweise vor Gießen der Desinfektionsmittellösung über den Tuchpacken in dem Behälter platziert.

Die Entnahme des Einwegdeckels erfolgt bevorzugt direkt nach dem Öffnen des Innenbeutels, d.h. vor Benetzung des Tuchpackens mit der Desinfektionsmittellösung.

Das Verfahren wird besonders bevorzugt wie folgt durchgeführt:
1. Spenderbehälter, bestehend aus einem Behälter und einem Deckel, bereitstellen.
2. Nachfüllpackung, bestehend aus einem trockenen Tuchpacken in Form einer Vliesrolle, bereitstellen,
3. den Innenbeutel, der die trockene Vliesrolle enthält, in den Behälter einlegen,
4. den Innenbeutel öffnen,
5. den Anfang der Vliesrolle, d.h. das erste Tuch, ein kleines Stück herausziehen, vorzugsweise aus der Mitte,
6. die Desinfektionsmittellösung langsam spiralförmig von der Mitte nach außen über die Vliesrolle gießen, um eine vollständige Benetzung sicherzustellen,
7. das erste Tuch durch die Entnahmeöffnung des Deckels führen und verwerfen,
8. den Innenbeutel durch die Entnahmeöffnung des Deckels ziehen, so dass der Tuchpacken durch den Innenbeutel vollständig gegen die Wandung des Behälters und gegen die Unterseite des Einwegdeckels abgedichtet ist,
9. bevorzugt das zweite Tuch verwerfen,
10. den Deckel auf den Behälter drehen und mit der Schutzkappe den Deckel verschließen.

Die im erfindungsgemäßen Mehrwegspendersystem verwendeten Tücher sind Feuchttücher, die durch Tränken des trockenen Tuchpackens mit der Desinfektionslösung entstehen. Besonders bevorzugt werden Desinfektionstücher verwendet.

Als Anwendungslösung zur Tränkung des Tuchpackens können handelsübliche Desinfektionsmittellösungen verwendet werden, insbesondere auch solche, die herkömmlich zur Tränkung von Vliestüchern verwendet werden, aber nicht immer in der Lage sind, Mikroorganismen in aufgebauten Biofilmen nachhaltig abzutöten. Hierbei handelt es sich insbesondere um wässrige Systeme mit meist oberflächenaktiven Wirkstoffen der nachfolgenden Gruppen: quartäre Ammoniumverbindungen, Alkylamine, Alkylaminderivate, Guanidine und Biguanidine, Amphotenside. Wenn bei anderen Wirkstoffen, wie Aldehyden, Peroxiden, chloraktiven Verbindungen, Phenolen und Mischungen daraus die Wirkstoffgehalte der wässrigen Verdünnungen geringer sind, kann es ebenfalls zu einer Einschränkung der mikrobioziden Aktivität gegen Bakterien in Biofilmen kommen. Auch diese Lösungen eignen sich aber für den Einsatz in einem erfindungsgemäßen Mehrwegspendersystem.

Es hat sich gezeigt, dass sich durch das erfindungsgemäße Mehrwegspendersystem an der Wand des Spenderbehälters, d.h. am Deckel oder am Behälter, kein Biofilm aufbaut, da die Wand des Behälters nicht mit dem wässrigen System in Berührung kommt und somit trocken bleibt. Durch den Innenbeutel wird der trockene Tuchpacken bzw. der mit der Anwendungslösung getränkte Tuchpacken außerdem vor möglichen Biofilmen und sonstigen Verschmutzungen an der Innenseite der Behälterwand geschützt, sofern solche bereits vorhanden sind. Eine Verwendung des erfindungsgemäßen Mehrwegspendersystems ist also insbesondere dort zu empfehlen, wo die Bildung von Biofilmen oder die Ausbreitung von Biofilmen in Kontakt mit den Feuchttüchern vermieden werden soll.

Erfindungsgemäß bevorzugt wird die Gefahr einer Kontamination durch den Deckel noch dadurch reduziert, dass der Deckel als Einwegdeckel ausgebildet ist.

Die Feuchttücher, die durch Tränkung des Tuchpackens erhalten werden, sind bevorzugt grundsätzlich für die Reinigung und/oder Desinfektion von unbelebten Oberflächen und Instrumenten verwendbar. Das erfindungsgemäße Mehrwegspendersystem kann aber auch mit hautfreundlichen Reinigungs- und/oder Desinfektionsmittellösungen verwendet werden, so dass die Feuchttücher für die Hände- und/oder Hautdesinfektion genutzt werden können.

Die Erfindung wird anhand der beigefügten Figuren beispielhaft erläutert. Es zeigen
- **Figur 1:**: eine Ausführungsform der Erfindung, bei der der Innenbeutel über den Rand des Behälters gezogen ist und mit dem Deckel fixiert wird
- **Figur 2:**: eine alternative Ausführungsform der Erfindung, bei der der Innenbeutel durch die Entnahmeöffnung gezogen wird.

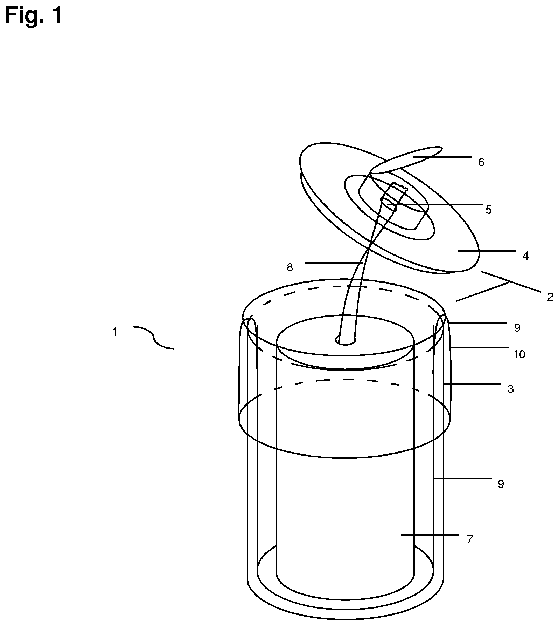

Figur 1 zeigt ein erfindungsgemäßes Mehrwegspendersystem 1 mit einem Spenderbehälter 2, der einen Behälter 3 sowie einen Deckel 4 umfasst. In dem Spenderbehälter 2 ist ein Innenbeutel 9 mit in diesem enthaltenen Tuchpacken 7 in Form einer Vliesrolle platziert. Der Befestigungsrand 10 ist über den oberen Rand des Behälters 3 gelegt. Der Tuchpacken 7 ist somit vollständig gegen die Wandung des Behälters 3 abgedichtet. Das erste Tuch 8 der Vliesrolle ist durch die Entnahmeöffnung 5 des Deckels 4 geführt. Durch Herausziehen des ersten Tuchs 8 wird das folgende Tuch durch die Entnahmeöffnung 5 nachgeführt. Um ein Austrocknen der Tücher zu verhindern, ist die Schutzkappe 6 vorgesehen, um den Spenderbehälter 2 zu verschließen. Die Tücher, die im trockenen Zustand in den Behälter 3 eingebracht wurden, sind mit Anwendungslösung, die in der Figur nicht erkennbar ist, getränkt.

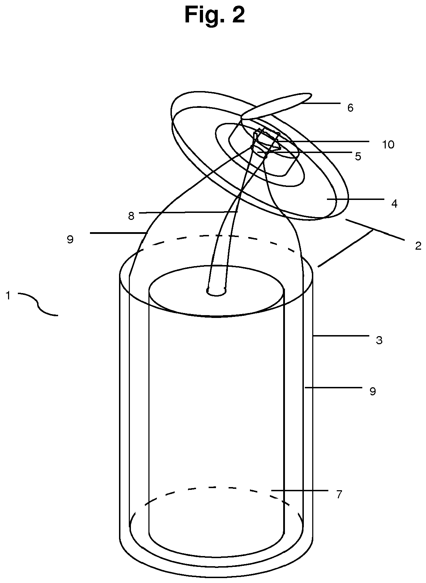

Das in Figur 2 gezeigte erfindungsgemäße Mehrwegspendersystem 1 ist eine alternative Ausführungsform, bei welcher der Befestigungsrand 10 nicht über den oberen Rand des Behälters 3, sondern stattdessen durch die Entnahmeöffnung 5 des Deckels 4 gezogen ist. Der Befestigungsrand 10 endet oberhalb der Entnahmeöffnung 5, aber innerhalb des durch die Schutzkappe 6 definierten Volumens, so dass ein Verschließen des Spenderbehälters 2 möglich ist. Auch hier werden die Tücher des Tuchpackens 7 durch die Entnahmeöffnung 5 geführt.

### Beispiel:

Eine Rolle mit 90 Tüchern eines Substrates (Vlies), 20 cm breit, jeweils 38 cm lang abgeteilt durch Perforation, befindet sich in einem Beutel. Die Rolle (Substrat) wird mit dem Beutel in den Behälter des Mehrwegspendersystems eingebracht. Der zylindrische Behälter hat einen Durchmesser von 180 +/- 5 mm und eine Höhe von 235 +/- 5 mm. Der Beutel einer Größe von Breite x Höhe von 30 cm x 40 cm wird über den oberen Rand des Behälters gezogen. Anschließend werden 2,5 Liter der anwendungsfertigen Desinfektionslösung, beispielsweise Baccalin®, Bacillocid® rasant, Kohrsolin® extra, Kohrsolin® FF, Mikrobac® forte, Mikrobac® basic, Mikrobac® food, Sokrena®, Bodedex® forte, Bomix® plus, Korsolex® extra, auf das Substrat gegeben. Nach circa 10 Minuten ist die Rolle gleichmäßig durchtränkt und einsatzbereit. Das erste Tuch des Substrates wird ca. 5 bis 10 mm durch die Austrittsöffnung des Deckels des Mehrwegspendersystems gezogen und verworfen. Der Deckel des Mehrwegspendersystems wird in der Weise auf dem Behälter befestigt, dass der Beutel fixiert ist und nicht mehr nach innen rutschen kann.

**Bezugszeichenliste**

| | |
|---|---|
| Mehrwegspendersystem | (1) |
| Spenderbehälter | (2) |
| Behälter | (3) |
| Deckel | (4) |
| Entnahmeöffnung | (5) |
| Schutzkappe | (6) |
| Tuchpacken | (7) |
| erstes Tuch | (8) |
| Innenbeutel | (9) |
| Befestigungsrand | (10) |

## Patentansprüche

1. Mehrwegspendersystem (1) für Desinfektionstücher, umfassend
• einen Spenderbehälter (2), bestehend aus einem Behälter (3) und einem Deckel (4) mit einer Entnahmeöffnung (5) und ggf. einer Schutzkappe (6),
• einen trockenen Tuchpacken (7), der im Inneren des Spenderbehälters (2) platziert ist,
• eine wässrige Desinfektionsmittellösung,
**dadurch gekennzeichnet, dass**
das Mehrwegspendersystem (1) einen Innenbeutel (9) aus Kunststoff aufweist, der zwischen der Wandung des Behälters (3) und dem trockenen Tuchpacken (7) angeordnet ist und den Tuchpacken (7) vollständig gegen die Wandung des Behälters (3) abdichtet,
und der Innenbeutel einen Befestigungsrand (10) aufweist, mit dem er an dem Behälter (3) befestigbar ist, indem der obere, offene Rand des Innenbeutels über den Rand des Behälters gezogen wird und über diesen überlappt, oder indem der Innenbeutel, mit dem darin angeordneten mit der Desinfektionslösung getränkten Tuchpacken, an dem Deckel (4) befestigt wird.

2. Mehrwegspendersystem (1) gemäß Anspruch 1, **dadurch gekennzeichnet, dass** der Tuchpacken (7) eine Tuchrolle oder ein gefalteter Stapel Tücher ist, besonders bevorzugt eine Rolle Vliestücher oder ein Stapel gefalteter Vliestücher, besonders bevorzugt eine perforierte Vliestuchrolle.

3. Mehrwegspendersystem (1) gemäß einem der vorhergehenden Ansprüche, **dadurch gekennzeichnet, dass** die Desinfektionsmittellösung ein wässriges System mit mindestens einem oberflächenaktiven Wirkstoff ausgewählt aus der Gruppe bestehend aus quartären Ammoniumverbindungen, Alkylaminen, Alkylaminderivaten, Guanidinen und Biguanidinen, Amphotensiden oder einem Wirkstoff ausgewählt aus der Gruppe bestehend aus Aldehyden, Peroxiden, chloraktiven Verbindungen, Phenolen und Mischungen daraus ist.

4. Mehrwegspendersystem (1) gemäß einem der vorhergehenden Ansprüche, **dadurch gekennzeichnet, dass** der Innenbeutel (9) aus einer flüssigkeitsdichten, wasser- und alkoholbeständigen Kunststofffolie besteht, bevorzugt aus einer Polyolefinfolie, beispielsweise einer Polyethylen- oder Polypropylenfolie, einer Polyamid-, Polyvinylchlorid-, Polyester-, Polycarbonat- oder Polystyrolfolie, wobei es sich bei der Kunststofffolie bevorzugt um ein einschichtiges Material oder um einen Mehrschichtverbund handelt.

5. Mehrwegspendersystem (1) gemäß Anspruch 4, **dadurch gekennzeichnet, dass** die Schichtdicke der Folie im Bereich von 5 µm bis 150 µm liegt, bevorzugt im Bereich 10 µm bis 70 µm, weiter bevorzugt 20 µm bis 60 µm.

6. Mehrwegspendersystem (1) gemäß einem der vorhergehenden Ansprüche, **dadurch gekennzeichnet, dass** der Innenbeutel (9) Markierungen aufweist, die die Befestigung des Innenbeutels (9) im Behälter und/oder am Deckel (4) angeben.

7. Mehrwegspendersystem (1) gemäß einem der vorhergehenden Ansprüche, **dadurch gekennzeichnet, dass** der Deckel (4) zum Verschließen ein Einwegdeckel ist.

8. Mehrwegspendersystem (1) gemäß einem der vorhergehenden Ansprüche, **dadurch gekennzeichnet, dass** die Breite des Innenbeutels (9) mindestens den halben Umfang des Behälters (3) zuzüglich mindestens 5 % beträgt und die Länge des Innenbeutels (9) mindestens der Innenhöhe des Behälters (3) zuzüglich mindestens 30 % entspricht.

9. Verfahren zur Herstellung eines Mehrwegspendersystems (1) für Feuchttücher, umfassend die Schritte:
a. Bereitstellen eines Spenderbehälters (2), bestehend aus einem Behälter (3) und einem Deckel,
b. Abnehmen des Deckels (4) von dem Behälter (3) und Einlegen eines Innenbeutels (9) aus Kunststoff, der einen trockenen Tuchpacken (7) enthält,
c. Gießen einer Desinfektionsmittellösung über den Tuchpacken, und anschließend Befestigen des Innenbeutels am Deckel, so dass der Tuchpacken durch den Innenbeutel vollständig gegen die Wandung des Behälters und die Unterseite des Deckels abgedichtet ist, und ggf. Führen des ersten Tuchs des Tuchpackens teilweise durch die Entnahmeöffnung im Deckel,
d. Positionieren des Deckels auf dem Behälter und ggf. Verschließen des Deckels mit einer Schutzkappe.

10. Verfahren zur Herstellung eines Mehrwegspendersystems (1) für Feuchttücher gemäß Anspruch 9, **dadurch gekennzeichnet, dass** der Innenbeutel an einem zweiten Deckel befestigt wird und der zweite Deckel (4) ein Einwegdeckel ist.

11. Verwendung von Innenbeuteln (9) in Mehrwegspendersystemen (1) für Tuchpacken (7) zur Vermeidung der Entstehung und Ausbreitung von Biofilmen in diesen Mehrwegspendersystemen (1), bei anwenderseitiger Tränkung der Tuchpacken (7) mit wässrigen Reinigungs- und Desinfektionsmittellösungen, wobei das Mehrwegspendersystem (1)
• einen Spenderbehälter (2), bestehend aus einem Behälter (3) und einem Deckel (4) mit einer Entnahmeöffnung (5) und ggf. einer Schutzkappe (6),
• einen trockenen Tuchpacken (7), der im Inneren des Spenderbehälters (2) platziert ist, und
• eine wässrige Anwendungslösung, bevorzugt eine Reinigungs- und/oder Desinfektionsmittellösung, umfasst.

12. Verwendung von Innenbeuteln (9) in Mehrwegspendersystemen (1) für Tuchpacken (7) gemäß Anspruch 11 , **dadurch gekennzeichnet, dass** die Feuchttücher zur Reinigung und/oder Desinfektion von unbelebten Oberflächen und Instrumenten verwendet werden.

13. Verwendung von Innenbeuteln (9) in Mehrwegspendersystemen (1) für Tuchpacken (7) gemäß Anspruch 11 oder 12, **dadurch gekennzeichnet, dass** der Behälter eine Schutzkappe aufweist und der obere Rand des Beutels oberhalb der Entnahmeöffnung, aber innerhalb des durch die Schutzkappe definierten Raumes angeordnet ist.
